# EUROPEAN PATENT APPLICATION

(11) **EP 1 967 353 A1**
(43) Date of publication of application: **10.09.2008**
(21) Application number: 05782608.3
(22) Date of filing: 19.08.2005
(51) Int. Cl.: B29C 70/34, B29C 70/46, B29C 70/54, B64C 1/06, B29D 31/00, B29L 31/30

(54) **COMPOSITE STRINGERS COMPRISING A BULB-SHAPED PART**

(71) Applicant: Airbus España, S.L., s/n Getafe 28906 Madrid (ES)
(72) Inventor: MUÑOZ ROYO, Pedro Luis, E-28906 Madrid (ES); ESCOBAR BENAVIDES, Francisco, E-28906 Madrid (ES); PEREZ PASTOR, Augusto, E-28906 Madrid (ES); POBLACIÓN GARCÍA, Ignacio, E-28008 Madrid (ES)
(74) Representative: Elzaburu Marquez, Alberto
(86) International application number: PCT/ES2005/070123
(87) International publication number: WO 2007/023197

(57) **Abstract**

The invention relates to a stringer (11, 21, 31) made of a composite material for stiffening panels made of a composite material, particularly those used in the aeronautics industry, formed by a foot (15) for joining with the panel and a structural member (13, 23, 33) with a structural reinforcement (17, 27, 37) embedded at the end opposite to the foot (15) formed by high-modulus unidirectional fibers of the same material as the stringer or another material compatible with it. The invention also relates to a process of manufacturing the stringer.

## Description

### FIELD OF THE INVENTION

The invention relates to stringers made of a composite material (carbon fiber or fiber glass, with thermosetting or thermoplastic resin) with a T, J or I shape used to stiffen panels made of a composite material and, more particularly, of those used in the aeronautics industry.

### BACKGROUND OF THE INVENTION

Stringers are used to obtain panels that are able to support loads on their plane (specially compression and shear loads) without having to increase the thickness of said panels. These stringers provide the panel with enough rigidity to support the loads without significantly increasing the weight of the structure.

When the stringers are made of a composite material, the most usual shapes thereof are usually T, C, Ω, I, J and U shapes.

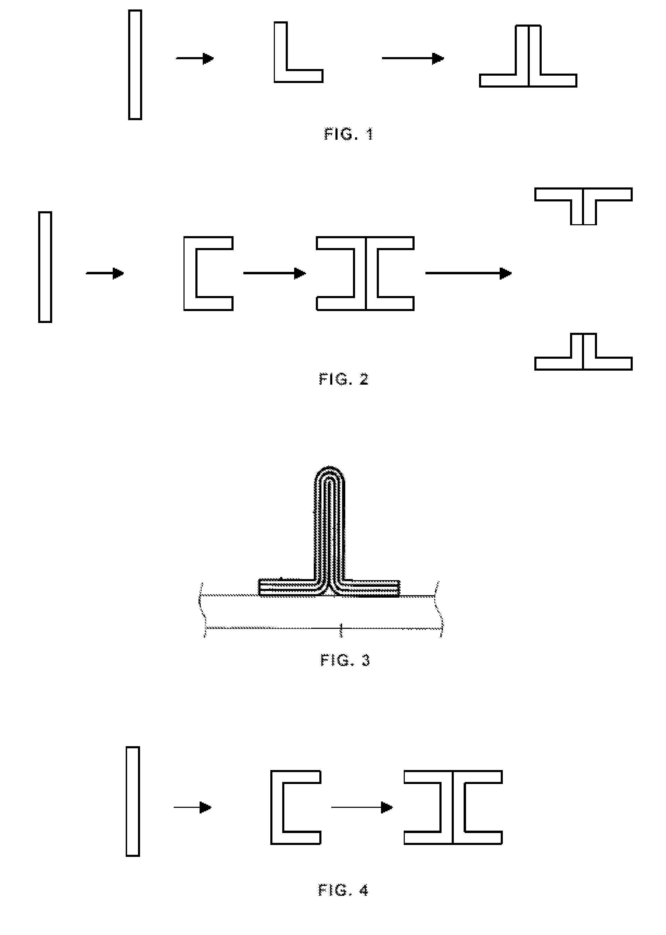

To manufacture T-shaped stringers (see Figure 1), a planar laminate is first made, then said laminate is formed to obtain an L-shaped profile. The T-shaped configuration is obtained after bonding the L-shaped profiles. Another possibility (see Figure 2) is to form the laminate to obtain a C-shaped profile. The T-shaped configuration is obtained by bonding two C-shaped profiles and cutting it in half.

In these stringers manufactured from a planar laminate, the rigidity of the material (elastic modulus, E) of the areas farthest away from the foot (which provides more inertia) cannot be increased to provide more rigidity (EI), nor can the height of the stringer be increased indefinitely because of web stability problems. Therefore the only way to increase flexural rigidity (EI) is to increase the thickness (and therefore the weight) thereof.

Furthermore in these stringers manufactured by bonding two profiles together, the head of the web is very sensitive to damage because delaminations can occur, separating the two L-shaped profiles (or the two C-shaped profiles).

There are other methods of manufacturing T-shaped stringers (see Figure 3) in which the problems of sensitivity to damage are solved, consisting of forming the laminate in half to obtain the T shape without having to bond L-shaped profiles. However, they do not manage to solve the drawback of increasing the rigidity of the material (the elastic modulus, E) in the areas farthest away from the foot without increasing the thickness of the entire stringer.

Another problem that is not solved is the following: the foot of the stringer must be wide enough for reparability considerations, making its weight increase without significantly increasing inertia.

I-shaped stringers (see Figure 4) are more efficient, but their manufacturing process is complicated. Two C-shaped stringers must be bonded and reinforced with strips at 0° at the foot and head to prevent debonding, which further complicates their manufacture in addition the problem of tolerance to damage in the edges of the I-shaped stringer and the problem of increasing the foot thickness to increase stringer rigidity are not solved.

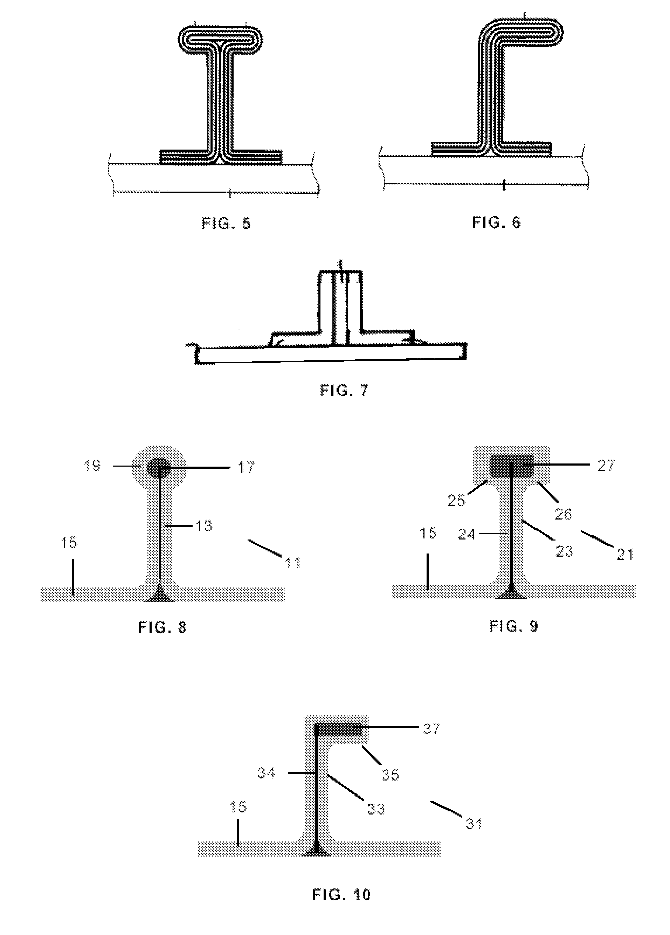

As occurs with T-shaped stringers there are methods of manufacturing I-shaped stringers in which C-shaped profiles do not have to be bonded (methods of manufacture by bending/shaping) (see Figure 5), but the problem of increasing flexural rigidity (EI) in the areas farthest away from the foot without increasing the thickness thereof is not solved either.

Ω-shaped stringers provide enough torsional rigidity, but their assembly is complicated. They increase equipment costs because a tool is required for their manufacture, and it adds further problems to inner area inspectability and reparability.

J-shaped stringers (see Figure 6) are less effective than I-shaped stringers, and furthermore their manufacturing process is more complicated.

It must be indicated that in the manufacturing process of some of the mentioned stringers, roving (Unidirectional twisted tows at 0°) is usually added in the web and flange joining areas. This roving has no structural responsibilities and its only purpose is to fill in the gaps produced in these parts, thus preventing resin concentration points from being generated. There are also methods to obtain T-shaped stringers in which the drawback of increasing rigidity of the material (elastic modulus, E) in the areas farthest away from the foot is solved without increasing the thickness of the entire stringer. These methods consist of introducing several plies made of a composite material between L-shaped profiles (see Figure 7).

The elastic modulus of the web of the stringer can be increased with these methods without increasing the thickness of the foot thereof, but the problem of sensitivity to damage is not solved; in fact it worsens because the area sensitive to experiment delaminations with this configuration has two joints so that the possibility of the occurrence of delaminations increases.

### SUMMARY OF THE INVENTION

The present invention proposes a stringer made of a composite material (carbon fiber or fiberglass with thermosetting or thermoplastic resin) -to stiffen panels made of a composite material- formed by a foot for joining with the panel and a structural member or web which on the end opposite to the foot and between the plies of material, includes a structural reinforcement formed by high-modulus unidirectional fibers of the same material as the stringer or a material compatible with it.

For the purpose of the present invention, stringer must be understood to mean any longitudinal member airplane components such as a bar or stiffener.

Said structural reinforcement consists of a high-modulus laminate or structural member encased, inserted or intercalated in the stringer's edge that has been formed to optimize or provide greater resistance or stiffening capacity.

The stringer may have, among others, a T, J and I shape, and in all of them the end part of the structural member has a bulb shape with plies of composite material surrounding the reinforcement. This bulb provides the stringer with greater rigidity and greater tolerance to damage than does that of conventional stringers, achieving a weight reduction.

The invention also provides a process of manufacturing a stringer with a bulb having the mentioned features, comprising the following steps:
a) providing a planar laminate made of a composite material formed by plies of carbon fiber or fiberglass with thermosetting or thermoplastic resin;
b) forming the laminate by means of the appropriate method (presses, rollers, inflatable tool, etc...) and manner (continuous, semi-continuous, etc...) according to the desired stringer shape;
c) introducing the reinforcement with suitable means to vary the width and shape thereof and the height of the stringer;
d) giving the stringer its optimized final shape, whether it is a constant section or variable section.

Other features and advantages of the present invention will be understood from the following detailed description of an illustrative embodiment of its object in relation to the appended figures.

### BRIEF DESCRIPTION OF THE DRAWINGS

Figures 1-7 show cross-sectional views of stringers known in the art in T, I and J shapes and schemes showing their manufacturing process.
Figures 8, 9 and 10 respectively show cross-sectional views of stringers according to the invention in T, I and J shapes.
Figure 11 shows the process of obtaining stringers according to the present invention.
Figures 12 and 13 show stringers according to the invention compared with known T-shaped stringers.

### DETAILED DESCRIPTION OF THE INVENTION

T-shaped stringers 11 will first be discussed.

These stringers 11 are formed by the following parts: a web 13 which is the slender part perpendicular to the foot (or to the panel) thereof, a foot (15) which is the part that is in contact with the panel (not shown) and functions as a means of joining the panel and stringer, and a reinforcement 17 arranged at the end of the web 13 opposite to the foot 15, forming a final part with a bulb shape.

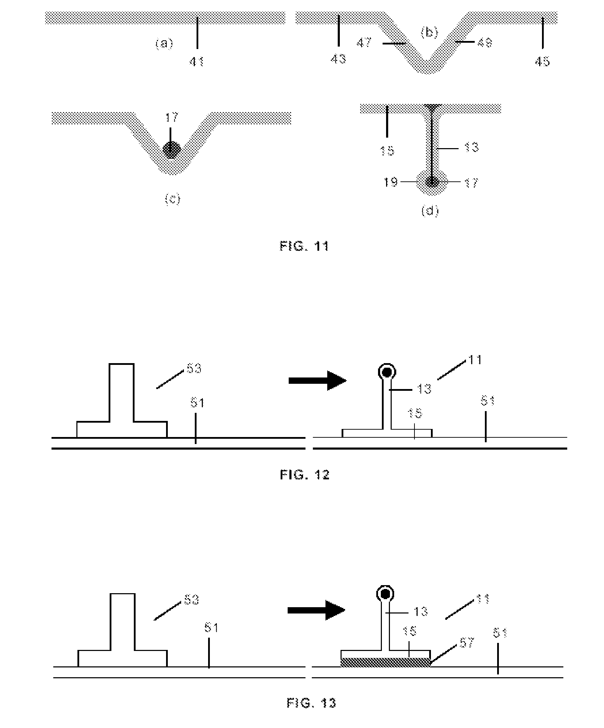

In Figure 11, it can be observed that the stringer is manufactured in several steps.

In step a) a planar laminate made of a composite material 41 formed by plies of carbon fiber or fiber glass, with thermosetting or thermoplastic resin is used to start from.

In step b) said laminate is formed, defining the two parts 43, 45 that will form the foot 15 and the two parts 47, 49 that will form the web 13. This forming can be carried out in different ways, for example rollers may be used which, by means of successive rotations, carry out shaping continuously or semi-continuously, or by means of inflatable tools carrying out the pressure required to perform the forming.

In step c) the integrated reinforcement 17 between the parts 47, 49 of the web 13 is introduced. The means for encasing the laminate can be controlled to vary the width, shape and narrowing thereof.

In step d) the stringer reaches its final shape. This final shape can have a constant section or conversely may also be optimized by means of sections with variable geometry, but with the end part 19 having a bulb shape. A method of feeding a length of this structural member (laminate) inside the already mentioned stiffener laminate or preform is also proposed.

The structural member 17 is formed by high-modulus unidirectional fibers made of the same material as that used for manufacturing the stringer 11 or another material compatible with it, built-in between the two formed plies of the laminate. The primary purpose of the unidirectional fibers forming the reinforcement 17 is to increase the rigidity of the material in the areas farthest away from the foot 15 of the stringer 11 as well as total inertia of the stringer 11 (this is what is referred to as having structural responsibility). Furthermore the tolerance to damage of said stringer 11 increases because the manufacture thereof is carried out continuously.

Stringer rigidity is considerably increased if reinforcing plies of carbon fiber or fiberglass are clustered at 0° with thermosetting or thermoplastic resin in the reinforcement 17. The reinforcement 17 does not remarkably vary the area of the stringer 11 but it does significantly contribute to inertia and rigidity. This would allow obtaining stringers with equal rigidity but less area (weight).

These stringers 11 are specially useful in the areas in which a great deal of flexural rigidity (high EI) is required without a significant penalty with regards to weight of the structure, since inertia is increased in an area in which the elastic modulus is very high, and plies of carbon fiber or fiberglass with thermosetting or thermoplastic resin are further being eliminated from the foot, (where they are not very effective), to place them in an area that is farther away, where their effectiveness increases.

If this type of stringers 11 is compared with conventional T-shaped stringers, weight reductions of about 15-20% can be obtained, with the same EA and having a flexural rigidity (EI) that is equal to or even up to 15% higher.

As stated in previous paragraphs, the primary purpose of the stringers is to stiffen the panels made of a composite material, therefore it is also appropriate to compare a panel 51 stiffened with this type of stringers 11 with a panel 51 stiffened with conventional stringers 53, as illustrated in Figures 12 and 13, being able to observe that depending on the type of failure mode affecting the stringer and panel assembly, the weight savings that can be obtained with this type of stringers 11 in comparison with conventional T-shaped stringer and panel assembly varies. When the type of failure mode affecting the stringer and panel assembly is mainly due to general buckling or resistance, a weight reduction of about 10-15% can be obtained; in contrast when the main type of failure mode affecting the stringer and panel assembly is local buckling of the panel, the weight reduction is less. In this type of failure mode the foot of the stringer 15 is supporting the panel, and the inertia and rigidity (EI) are not as important. Therefore in the areas in which the failure mode is due to local buckling of the panel, it is advisable to add a supplement 57 on the foot 15 of the stringer so as to not weaken the foot 15 of the stringer (see Figure 13).

In addition , better tolerance to damage is achieved with this type of stringers 11 since they have the reinforcement 17 integrated inside the stringer, the manufacturing process is much robust and the probability of the occurrence of delaminations is remarkably reduced. There are no discontinuities in the outer ply thereof in which said delaminations may begin. There are no discontinuities because the planar laminate made of a composite material 41, formed by plies of any reinforcement fiber, among others carbon fiber and fiberglass, with thermosetting or thermoplastic resin, with which it is manufactured surrounds the reinforcement 17 so that the discontinuity it generates remains inside the stringer 11 itself, preventing delaminations from occurring due to impact on the outer ply.

Another further advantage is that a stiffener is manufactured in a integrated manner, therefore reducing the number of parts to be manufactured and eliminating the process of co-curing of the different parts.

The foregoing is applicable to I-shaped stringers 21 formed by a foot 15, a structural member formed by a web 24 and two side flanges 25, 26 and with a reinforcement 27 arranged between the plies of the side flanges 25, 26 such that the latter have an elongated bulb shape.

It is also applicable to J-shaped stringers 31 formed by a foot 15, a structural member formed by a web 34 and a side flange 35 and with a reinforcement 37 arranged between plies of the side flange 35 such that the latter has an elongated bulb shape.

The same advantages are achieved with this stringer as with conventional stringers in terms of versatility thereof due to the possibility of using more than one cross section depending on the existing requirements.

In the preferred embodiment just described modifications comprised within the scope defined by the following claims may be introduced.

## Claims

1. A stringer (11, 21, 31) of a composite material for stiffening panels made of a composite material formed by a foot (15) for joining with the panel and a structural member (13, 23, 33), **characterized in that** at the end opposite to the foot (15) and between plies of material, the structural member (13, 23, 33) includes a structural reinforcement (17, 27, 37) formed by high-modulus unidirectional fibers made of the same material as the stringer or another material that is compatible with it.

2. A stringer (11) according to claim 1, **characterized in that** it has a T shape, the structural member being formed by a web (13), and **in that** the reinforcement (17) is arranged such that the end part (19) has a rounded bulb shape.

3. A stringer (21) according to claim 1, **characterized in that** it has an I shape, the structural member (23) being formed by a web (24) and two side flanges (25, 26), and **in that** the reinforcement (27) is arranged between plies of the side flanges (25, 26) such that the latter have an elongated bulb shape.

4. A stringer (31) according to claim 1, **characterized in that** it has a J shape, the structural member (33) being formed by a web (34) with a side flange (35), and **in that** the reinforcement (37) is arranged between plies of the side flange (35) such that the latter has an elongated bulb shape.

5. A process of manufacturing a stringer according to claims 1-4, **characterized in that** it comprises the following steps:
a) providing a planar laminate made of a composite material formed by plies of carbon fiber or fiberglass, with thermosetting or thermoplastic resin;
b) appropriately forming the planar laminate, according to the desired stringer shape;
c) introducing the reinforcement;
d) giving the stringer its final shape.

6. The process of manufacturing a stringer according to claim 5, **characterized in that**:
- in step b) the planar laminate (41) is formed to become a T-shaped stringer defining the two parts (43, 45) that will form the foot (15) and the two parts (47, 49) that will form the web (13);
- in step c)the reinforcement (17) is introduced between parts (47, 49) of the web (13).
- in step d) the stringer is given its final shape with the end part (19) in a rounded bulb shape.
